# EUROPEAN PATENT SPECIFICATION

(11) **EP 2 911 523 B1**
(45) Date of publication and mention of the grant of the patent: **06.07.2016**
(21) Application number: 13774136.9
(22) Date of filing: 07.10.2013
(51) Int. Cl.: A23F 3/10, A23F 3/12, A23F 3/16, A23F 3/20, A23F 3/22

(54) **A PROCESS FOR PRODUCING A TEA PRODUCT**
VERFAHREN ZUR HERSTELLUNG EINES TEEPRODUKTS
PROCÉDÉ DE PRODUCTION D'UN PRODUIT DE THÉ

(30) Priority: 24.10.2012 EP 12189738
(43) Date of publication of application: 02.09.2015
(73) Proprietor: Unilever N.V., 3013 AL Rotterdam (NL); Unilever PLC, London, Greater London EC4Y 0DY (GB)
(72) Inventor: BHOSLE, Balaji Marotrao, Whitefield Bangalore 560 066 (IN); GANPAPPA, Rajashekhar, Bangkok 10520 (TH); SOMPURE, Sandeep Sangram, Whitefield Bangalore 560 066 (IN)
(74) Representative: Askew, Sarah Elizabeth
(86) International application number: PCT/EP2013/070786
(87) International publication number: WO 2014/063916

(56) References cited:
- EP-A1- 1 854 363
- WO-A1-2006/013530
- CN-A- 102 492 665
- US-A- 4 051 264
- DATABASE WPI Week 200429 Thomson Scientific, London, GB; AN 2004-310671 XP002698613, & JP 2004 113090 A (JAPAN TOBACCO INC) 15 April 2004 (2004-04-15)
- DATABASE WPI Week 201310 Thomson Scientific, London, GB; AN 2012-R50129 XP002698614, & CN 102 687 778 A (HUBEI TAIYANGFENG BIOLOGICAL TECHNOLOGY CO LTD) 26 September 2012 (2012-09-26)

## Description

### Technical Field

The present invention relates to a process for producing a black leaf tea product.

### Background and prior art

Tea is one of the well-known beverages that are consumed throughout the world on daily basis. There are varieties of teas available in the market e.g. black tea, green tea, oolong tea, white tea etc. Out of these teas, black tea is believed to be more popular. Tea is believed to be a drink which relaxes the mind and provides refreshment. Therefore the sensorials of tea products are very important. Consumers always cherish a cup of tea with different sensorials. That is the reason for the availability of different formats of tea in the market e.g. instant tea, leaf tea, tea juice etc.

Different treatments to obtain a black tea product with improved characteristics are known. US4639375 (The Procter & Gamble company, 1987) discloses a process for the enzymatic treatment of black tea leaf. In particular, black tea leaf is wetted with water containing tannase and one or more cell-wall digesting enzymes, such as cellulase, pectinase, papain or hemicellulase, prior to extraction. The enzyme-moistened tea leaf is incubated in a closed system at room temperature for a few hours. The enzyme-treated tea is then neutralized with a suitable food grade base and the enzymes are inactivated by heating. The resulting treated tea can be extracted and processed in the usual manner or dried for use in tea bags in the usual manner. As a result, a higher yield of tea is obtained and the resulting instant tea has better solubility in cold water than conventional teas.

WO2006/013530 (The University of Stellenbosch etc., 2006) discloses a process of treating Rooibos plant material to obtain Rooibos tea extracts with improved extract yield and colour development. The process includes contacting Rooibos plant material with an effective amount of at least one exogenous enzyme under predetermined conditions thereby to obtain Rooibos tea extracts having improved extract yield and colour development. The enzyme is selected from pectinase, ferulic acid esterase, beta-glucanase, cellobiohydrolase, beta-xylanase and phenol oxidase and the Rooibos plant material is selected from green tea, fermented tea or spent tea.

Economical production of a tea juice product and a leaf tea product from the same tea leaf such that two different types of tea product is obtained by processing the same tea leaf are also known in the art.

WO 2009/059924 (Unilever, 2009) discloses a process comprising the steps of: expressing juice from fresh tea leaves thereby to produce leaf residue and tea juice, wherein the amount of expressed juice is between 10 and 300 mL per kg of fresh tea leaves; and processing the leaf residue to produce leaf tea and/or a tea extract. We have found that the leaf tea product obtained by this process (after expressing the juice) does not provide a black tea infusion with brighter appearance, which is preferred by the consumer. Bright coloured tea liquor always attracts the consumer.

Therefore there is a need for a process which produces a tea juice product and a leaf tea product with brighter infusion characteristics from the same tea leaf.

### Objects of the invention

It is therefore an object of the present invention is to overcome or ameliorate at least one of the disadvantages of the prior art.

It is another object of the present invention to provide a black leaf tea product.

It is yet another object of the present invention to economically provide a black leaf tea product with brighter infusion characteristics along with a liquid tea product, by using the same tea leaf.

The present inventors while working extensively to provide a good quality black leaf tea product from the residue produced after expressing juice have surprisingly found that the addition of an enzyme in the fermentation stage produces a leaf tea product with improved characteristics. Furthermore when this product is brewed in hot water, it produces an infusion with a brighter appearance and thereby satisfies one or more of the above mentioned objects.

### Summary of the invention

Accordingly the present invention provides a process of preparation of a tea product comprising the steps of:
a. comminuting fresh tea leaf from *Camellia sinensis* var. *sinensis* and/or *Camellia sinensis* var. *assamica;*
b. adding cell wall digesting enzyme to the comminuted tea leaf;
c. fermenting the comminuted tea leaf ;
d. expressing juice from the fermented tea leaf thereby producing tea juice and leaf residue;
e. drying the leaf residue to obtain a black tea product.

Any feature of one aspect of the present invention may be utilized in any other aspect of the invention. The word "comprising" is intended to mean "including" but not necessarily "consisting of" or "composed of." In other words, the listed steps or options need not be exhaustive. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

"Tea" for the purposes of the present invention preferably means material from *Camellia sinensis* var. *sinensis* and/or *Camellia sinensis* var. *assamica.* Especially preferred is material from var. *assamica* as this has a higher level of tea actives than var. *sinensis.*

"Leaf tea" for the purposes of this invention preferably means a tea product that contains tea leaves and/or stem in an un-infused form, and that has been dried to a moisture content of less than 30% by weight, and usually has a water content in the range 1 to 10% by weight (i.e. "made tea").

"Black tea" refers to substantially fermented tea.

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

"Fresh tea leaves" preferably refers to tea leaves, buds and/or stem that have never been dried to a water content of less than 30% by weight, and usually have water content in the range 60 to 90%.

As used herein the term "expressing juice" refers to squeezing out juice from fresh tea leaves using physical force, as opposed to extraction of tea solids with the use of a solvent. Thus the term "expressing" encompasses such means as squeezing, pressing, wringing, spinning and extruding. During the expression step, the moisture content of the tea leaves is between 30 and 90% by weight, more preferably between 50 and 80%. It is also preferred that the fresh leaves are not contacted with non-aqueous solvents (e.g. alcohols) prior to or during expression, owing to the environmental & economic problems associated with such solvents.

The present invention provides a process of preparation of a tea product comprising the steps of:
a. comminuting fresh tea leaf from *Camellia sinensis* var. *sinensis* and/or *Camellia sinensis* var. *assamica;*
b. adding cell wall digesting enzyme to the comminuted tea leaf;
c. fermenting the comminuted tea leaf;
d. expressing juice from the fermented tea leaf thereby producing tea juice and leaf residue;
e. drying the leaf residue to obtain a black tea product.

The tea leaf may include leaf, buds, stem and other parts of the tea plant. According to step (a), the fresh tea leaf undergoes comminution. This is a process where the cellular structure of the tea leaf is broken which causes further biochemical reactions to occur. This can be done in different ways. Preferably it is done either by CTC or by the orthodox method. The main aim of this process is to damage the leaf to break the cellular structure. In the CTC process it is done by a CTC machine where three actions, viz. cutting, tearing and curling, are performed on the tea leaf. In the orthodox process it is done by subjecting the tea leaf to a rolling movement under pressure and then twisting the leaf thereby rupturing the cells and releasing the juice.

Comminution is preferably carried out after plucking of the fresh tea leaf. It is particularly preferred that the fresh tea leaves comprise material from var. *assamica* as this variety naturally has a high level of tea actives and so leads to a high level of actives in the leaf residue even after removal of the juice.

Optionally after plucking the fresh tea leaf it is subjected to a step known as withering. Withering is a process where plucked tea leaves are allowed to lose moisture over a period of time. This preferably carried out in a shallow trough where biochemical reactions occur and which causes formation of many beneficial compounds including aroma compounds. Preferably, to speed-up the moisture losing process, dry air is passed in a regulated manner through the leaf. Generally withering is carried out for a period of 10 to 18 hours, more preferably for 12 to 18 hours.

After comminution, the process of the present invention includes the addition of cell wall digesting enzyme. Cell wall digesting enzymes preferably means those enzymes which break down the structural integrity of the tea plant cell-wall.

Preferably the enzyme is selected from pectinase, cellulase, hemicellulase or mixtures thereof. Pectinase is the most preferred one.

Preferably the amount of enzyme added is in the range of 0.01 to 1%, more preferably 0.01 to 0.8%, furthermore preferably 0.01 to 0.5% and most preferably 0.01 to 0.4% by weight of tea leaf.

The comminuted leaf is then fermented which is a process in which enzymes in the tea leaf use atmospheric oxygen to oxidize various substrates to produce coloured products.

The fermentation is carried out preferably for 45 minutes to 3 hours, more preferably 45 minutes to 2.5 hours and most preferably for 60 minutes to 2 hours.

After fermenting the tea leaf in the presence of the enzyme, the tea leaf is subjected to expressing to produce leaf residue and tea juice.

The amount of expressed juice is preferably at least 50 mL per kg of the tea leaves. It is preferred that the amount of juice expressed is less than 800 mL per kg of tea leaves, more preferably less than 700 mL and most preferably less than 600 ml. It is also preferred, however that the amount of expressed juice is at least 75 mL per kg of the fermented tea leaves, more preferably at least 100 mL and most preferably at least 150 ml. When referring to the volume of juice expressed per unit mass of tea leaves it should be noted that the mass of the tea leaves is expressed on an "as is" basis and not a dry weight basis. Thus the mass includes any moisture in the leaves.

The expression step may be achieved in any convenient way so long as it allows for separation of the tea juice from the leaf residue and results in the required quantity of juice. The machinery used to express the juice may, for example, include a hydraulic press, a pneumatic press, a screw press, a belt press, an extruder or a combination thereof. The juice and leaf residue may be obtained from the tea leaves in a single pressing or in multiple pressings of the leaves. Preferably the juice and leaf residue is obtained from a single pressing as this allows for a simple and rapid process. The pressure applied to express the juice is preferably ranging from 0.5 MPa (73 psi) to 10 MPa (1450 psi). The time over which the pressure is applied is typically in the range of 1 second to 1 hour, more preferably from 10 second to 20 minutes and most preferably from 30 second to 5 minutes. In order to minimize generation of off-flavour in the leaf residue and/or juice, it is preferred that the expression step is preferably performed at ambient temperature. For example, the leaf temperature may be from 5 to 40 °C, more preferably 10 to 30 °C.

After the juice is squeezed out, the leaf residue is subjected to drying. The tea leaf is dried to a moisture content of less than 10%, preferably a moisture content of less than 5% by dry mass of the tea leaf. Drying is the process where the tea leaf is contacted with air at a temperature of preferably 50 to 100°C, during which the leaf loses moisture and the enzyme activities are stopped. By drying, the moisture content of the tea leaf is brought down to less than 10% preferably 2 to 3%. A tray drier or fluidized bed drier is preferably used for drying the tea leaf.

The tea juice obtained from the process of the present invention is preferably collected as a tea juice product.

The juice comprises preferably at least 4% by weight tea solids, more preferably at least 4.5% by weight tea solids and most preferably at least 5% by weight tea solids. There is no particular upper limit for the amount of tea solids in the tea juice and the tea juice may preferably comprise up to 30% by weight tea solids.

Water soluble tea solids are preferably 70 to 100% by weight of the tea solids, more preferably 80 to 100% by weight of the tea solids and most preferably 90 to 100% by weight of the tea solids.

The tea juice obtained above is preferably pasteurized after expression.

The tea juice obtained is preferably diluted with water (hot or cold) to obtain a tea-based beverage.

The black leaf tea product obtained by the process of the present invention as described above has much brighter appearance in infusion.

The tea product as obtainable and/or obtained by the process of the present invention which is infusible in an amount of 2 parts of tea leaf in 100 parts of boiling water (∼ 95 - 100°C) for 2 minutes to provide an infusion having a (b*/a*) ratio as measured on CIE L*a*b* scale using D65 illuminant at 25°C of higher than 8.5 preferably higher than 9.

The invention will now be demonstrated with the help of examples, which are for the purpose of illustration, and in no way limit the scope of the invention.

### Examples

### Process of preparation of a tea product of the invention and comparative examples

### Comparative Example A:

100 kg of fresh tea leaves were collected from a plantation in the north-eastern part of India. The tea leaves were withered at 25 °C in the open for 18 hours to bring the moisture of the leaves to 70-75%. After that the tea leaf was subjected to CTC (cut tear curl) 4 times to obtain macerated dhool. The macerated dhool was fermented (exposed to air at 25°C) for 75 minutes. After fermentation it was dried at a temperature of 120°C to get a black leaf tea product.

### Comparative example B:

The same process as for example A was followed except that after comminution 0.2% (by dry weight of dhool) of pectinase was added (Commercial name: Extractase, Supplier: Advanced Enzyme Technologies Limited, Mumbai, India).

### Comparative example C:

100 kg of fresh tea leaves were collected from a plantation in the north-eastern part of India. The tea leaves were withered at 25 °C in the open for 18 hours to bring the moisture of the leaves to 70-75%. After that the tea leaf was subjected to CTC (cut tear curl) 4 times to obtain macerated dhool. The macerated dhool was fermented (exposed to air at 25°C) for 75 minutes. After fermentation, tea juice was squeezed out of from the fermented dhool by a Pneumatic press operating at a pressure of 1 kg/cm². The juice obtained was centrifuged at 1500g in a REMI centrifugation machine, to separate the supernatant and residue. The residue was then dried at a temperature of 120°C to get a black leaf tea product.

### Example 1 (Within the scope of the present invention):

The same process as example C was followed except that after comminution 0.2% (by dry weight of dhool) of pectinase was added (Commercial name: Extractase, Supplier: Advanced Enzyme Technologies Limited, Mumbai, India).

### Colour measurement

Infusions of the black leaf tea products as obtained above were prepared by adding 100 mL of boiling water to 2g of the each tea product, allowing it to stand for 2 minutes, stirring once and then straining. Then the colour characteristics of the products (in infusion) were measured as follows:

CIE L*a*b* values were measured at room temperature (∼25°C) using an Ultrascan XE (Model-USXE/UNI version 3.4, Hunterlab Associates Laboratories Inc. Virginia). A halogen cycle lamp was used as the light source. The illuminant was D65 and the measurements were made at 10°observer angle. A quartz cuvette of 10 mm path length was filled up to the brim with the infusion and placed in the instrument for measurement. The instrument was calibrated using a standard white tile (Hunterlab Duffuse/8°, mode-RSEX, Port-1" and area-large) in accordance with the instruction manual. The maximum value for L* is 100, which represents a perfect reflecting diffuser. The minimum is L*=0, which represents black. The a* and b* axes have no specific numerical limits. Positive a* is red and negative a* is green. Similarly, positive b* is yellow and negative b* is blue. The higher the a* value, the redder the infusion is. The higher the b*/a* value, the brighter the infusion appears.

The results of the experiments are summarized below in Table 1:

**Table 1:**

| Example Number | L* | a* | b* | b*/a* |
|---|---|---|---|---|
| A | 78.87 | 10.45 | 85.18 | 8.15 |
| B | 77.16 | 13.54 | 92.69 | 6.85 |
| C | 78.78 | 10.16 | 85.23 | 8.39 |
| 1 | 79.93 | 9.19 | 85.07 | 9.26 |

From the above table it is clear that example 1 produces a tea product which is much brighter than those produced by example A, B or C. It is also evident that the b*/a* value is increased because the b* value is maintained while the a* value is decreased.

### Surface reflectance measurement

The surface reflectance values of the black leaf tea products were measured to evaluate the appearance. The less is the surface reflectance value the more dark the product is. It is believed that black tea leaf product with darker appearance is preferred by the consumers.

The surface reflectance of the leaf tea product was measured using a Photovolt Model 577 Reflectometer from Photovolt Instruments, USA. Search units (Y/T) were used with amber filter set. Standard plaque (26-577-01 719) was used for calibration.

### Procedure:

1. Install the Amber filter into the search unit for the reflectance measurement
2. Select the appropriate filter channel ('A' out of A, B, or G) by pressing the corresponding filter on the 577 front panel.
3. Place the black cavity standard on the search unit.
4. Depress the CHANGE key - the display goes black.
5. Depress the ZERO key - the display reads .0 (=/- 0.1).
6. Place a standard plaque on the search unit {Amber coloured plaque used is 26-577-01 719 (Green 8.5).
7. Depress the STD key - the display reads "75.0" or the last standard value entered for this filter channel. The STD, CHANGE, A, B and G LED's will all be lit.
8. Enter the standard plaque value by using the A, B, and G keys to increment the display's digits to the value printed on the back of the plaque for the selected filter (71.8)
9. Depress the STD key again - all LED's expect the selected filter channel LED (A, B, or G) will go out. This display should now be in the normal display mode and should display the value entered for the standard plaque (+/-0.2).
10. Fill the cuvette about 2/3^{rd} with sample (the black leaf tea or tea product) and tap gently to settle the powder/tea sample. Use the PRESS (Plastic part) to firmly press the sample into place or manually compress the powder. Observe the bottom of the cuvette and ensure that there are no air spaces, etc. Wipe the external surface of the cuvette clean.
11. Place the filled cuvette on the search unit.
12. Obtain reflectance values.

The results of the experiment are laid down in Table 2.

**Table 2:**

| Example Number | Surface Reflectance (%) |
|---|---|
| A | 28.3 |
| B | 26.1 |
| C | 30.2 |
| 1 | 24.9 |

From table 2 it is evident that the black leaf tea product, which is produced by processing the leaf residue obtained after expressing out juice, according to the process of the present invention (Example 1) provides a better (darker) appearance of the tea product when compared to a tea residue product (Example C) obtained after expressing out the juice.

The infusions obtained as above were tasted by a group of highly trained tea tasters. It was found that the tea product obtained from the leaf residue after expressing the juice as per the present invention (Example 1) was preferred over the product of example C both in terms of appearance and taste.

From the above discussion it is evident that by way of present invention, it is now possible to provide economically a black leaf tea product with brighter infusion characteristics along with a liquid tea product, by using the same tea leaf. Furthermore the appearance of the tea product obtained by the process of the present invention is darker than the tea residue product obtained after expressing the juice from the tea leaf.

## Claims

1. A process of preparation of a tea product comprising the steps of:
a. comminuting fresh tea leaf from *Camellia sinensis* var. *sinensis* and/or *Camellia sinensis* var. *assamica;*
b. adding cell wall digesting enzyme to the comminuted tea leaf;
c. fermenting the comminuted tea leaf;
d. expressing juice from the fermented tea leaf thereby producing tea juice and leaf residue;
e. drying the leaf residue to obtain a black tea product.

2. A process as claimed in claim 1 wherein the fresh tea leaf is subjected to withering before step (a).

3. A process as claimed in claim 1 or 2 wherein the enzyme is selected from pectinase, cellulase, hemicellulase or mixtures thereof.

4. A process as claimed in any one of the preceding claims wherein the amount of enzyme added is in the range of 0.01 to 1%.

5. A process as claimed in any one of the preceding claims wherein the fermentation is carried out for a time in the range of 45 minutes to 3 hours.

6. A process as claimed in any one of the preceding claims wherein the fresh tea leaf comprises material from *Camellia sinensis* var. *assamica.*

7. A process as claimed in anyone of the preceding claims wherein the tea juice obtained is collected.

8. A process as claimed in claim 7 wherein the collected juice is pasteurized to obtain a tea juice product.

9. A process as claimed in claim 7 or 8 wherein the juice is further diluted to obtain a tea based beverage.

## Patentansprüche

1. Verfahren zur Herstellung eines Teeprodukts, umfassend die Schritte:
a. Zerkleinern von frischem Teeblatt von *Camellia* sinensis var. sinensis und/oder Camellia sinensis var. assamica;
b. Zugabe von Zellwand verdauendem Enzym zu dem zerkleinerten Teeblatt;
c. Fermentieren des zerkleinerten Teeblatts;
d. Ausdrücken von Saft aus dem fermentierten Teeblatt, damit Teesaft und Blattrückstand gebildet wird;
e. Trocknen des Blattrückstands, um ein Schwarzteeprodukt zu erhalten.

2. Verfahren wie in Anspruch 1 beansprucht, wobei das frische Teeblatt vor Schritt (a) einem Welken unterworfen wird.

3. Verfahren wie in Anspruch 1 oder 2 beansprucht, worin das Enzym ausgewählt ist aus Pektinase, Cellulase, Hemicellulase oder Mischungen davon.

4. Verfahren wie in irgendeinem der vorhergehenden Ansprüche beansprucht, wobei die Menge an zugegebenem Enzym im Bereich von 0,01 bis 1% liegt.

5. Verfahren wie in irgendeinem der vorhergehenden Ansprüche beansprucht, wobei die Fermentation für eine Dauer im Bereich von 45 Minuten bis 3 Stunden durchgeführt wird.

6. Verfahren wie in irgendeinem der vorhergehenden Ansprüche beansprucht, wobei das frische Teeblatt Material von Camellia sinensis var. assamica umfasst.

7. Verfahren wie in irgendeinem der vorhergehenden Ansprüche beansprucht, wobei der erhaltene Teesaft gesammelt wird.

8. Verfahren wie in Anspruch 7 beansprucht, wobei der gesammelte Saft pasteurisiert wird, um ein Teesaft-Produkt zu erhalten.

9. Verfahren wie in Anspruch 7 oder 8 beansprucht, wobei der Saft ferner verdünnt wird, um ein auf Tee basierendes Getränk zu erhalten.

## Revendications

1. Procédé de préparation d'un produit de thé comprenant les étapes de :
a. réduction en poudre de feuille de thé fraîche de *Camellia sinensis* var. *sinensis* et/ou *Camellia sinensis* var. *assamica ;*
b. addition d'enzyme de digestion de paroi cellulaire à la feuille de thé réduite en poudre ;
c. fermentation de la feuille de thé réduite en poudre ;
d. expression de jus à partir de la feuille de thé fermentée produisant par-là du jus de thé et du résidu de feuille ;
e. séchage du résidu de feuille pour obtenir un produit de thé noir.

2. Procédé selon la revendication 1, dans lequel la feuille de thé fraîche est soumise à un séchage à l'air avant l'étape (a).

3. Procédé selon la revendication 1 ou 2, dans lequel l'enzyme est choisie parmi la pectinase, la cellulase, l'hémicellulase ou des mélanges de celles-ci.

4. Procédé selon l'une quelconque des revendications précédentes, dans lequel la quantité d'enzyme ajoutée se trouve dans l'intervalle de 0,01 à 1 %.

5. Procédé selon l'une quelconque des revendications précédentes, dans lequel la fermentation est réalisée sur une durée dans l'intervalle de 45 minutes à 3 heures.

6. Procédé selon l'une quelconque des revendications précédentes, dans lequel la feuille de thé fraîche comprend un matériau de *Camellia sinensis* var. *assamica.*

7. Procédé selon l'une quelconque des revendications précédentes, dans lequel le jus de thé obtenu est recueilli.

8. Procédé selon la revendication 7, dans lequel le jus recueilli est pasteurisé pour obtenir un produit de jus de thé.

9. Procédé selon la revendication 7 ou 8, dans lequel le jus est encore dilué pour obtenir une boisson à base de thé.
